# EUROPEAN PATENT APPLICATION

(11) **EP 4 527 485 A1**
(43) Date of publication of application: **26.03.2025**
(21) Application number: 23757186.4
(22) Date of filing: 13.04.2023
(51) Int. Cl.: B01D 53/34, B01D 53/50, B01D 53/62, B01D 53/78

(54) **METHOD AND APPARATUS FOR WASTE HEAT RECOVERY IN AMMONIA-BASED DESULFURIZATION AND DECARBONIZATION SYSTEM**

(30) Priority: 16.05.2022 CN 202210529871
(71) Applicant: Jiangnan Environmental Technology Inc, Ridgefield Park, NJ 07660 (US)
(72) Inventor: LUO, Jing, Nanjing, Jiangsu 211100 (CN); WANG, Jinyong, Nanjing, Jiangsu 211100 (CN); ZHANG, Jun, Nanjing, Jiangsu 211100 (CN); QI, Lifang, Nanjing, Jiangsu 211100 (CN)
(74) Representative: Bottero, Carlo
(86) International application number: PCT/CN2023/088086
(87) International publication number: WO 2023/221696

(57) **Abstract**

The present invention relates to a method for waste heat recovery in an ammonia-based desulfurization and decarbonization system, in which a heat of decarbonization system is removed by using a heat of a process gas before desulfurization, the process gas before desulfurization passes through a gas heat exchanger to heat an intermediate medium, and the intermediate medium drives a refrigerator for refrigeration, a refrigerant obtains a cooling capacity and reduces the temperature of the decarbonized process gas through the liquid-liquid heat exchanger. The present invention makes full use of the waste heat in the process gas, and is capable of being used for cooling the decarbonization process gas and reducing energy consumption.

## Description

### Technical Field

The present invention belongs to the technical field of environmental protection, and in particular relates to a method and device for recovering waste heat in ammonia-based desulfurization and decarbonization system.

### Background Art

Low-temperature flue gas from industrial boilers and other low-temperature industrial gases are directly discharged in the fields of petroleum, chemical industry, and domestic heating. Although low-temperature gas waste heat has a low quality, its total amount is relatively large, and thus has good potential for energy saving. In addition, with the aggravation of environmental pollution and energy shortage, China vigorously advocates energy conservation and emission reduction. Under this background, various enterprises pay more and more attention to how to utilize the waste heat of low-temperature gas generated in the production process.

CN105240826A discloses a low-temperature flue gas waste heat recovery system, which comprises: a heat collecting tower, a liquid storage tank, a circulating liquid pump and a liquid heat exchanger; the low-temperature flue gas enters the heat collecting tower and comes into direct contact with the droplets of an intermediate fluid ejected from a nozzle inside the heat collecting tower for heat exchange, and the low-temperature flue gas is discharged from the heat collecting tower after heat exchange and sent to the liquid heat exchanger; the liquid heat exchanger is connected to the circulating liquid pump to receive the intermediate fluid at the bottom of the heat collection tower, and the heat exchange between the liquids is carried out in the liquid heat exchanger, and the intermediate fluid flows through the liquid heat exchanger to the nozzle of the heat collection tower under the action of the head of the circulating liquid pump. This scheme only considers waste heat recovery from flue gas, and the recovered heat is used to heat boiler feed water, but it does not consider comprehensive energy utilization of waste heat recovery and flue gas desulfurization and decarbonization.

CN201410766487.4 proposes a process system and method for combined desulfurization and decarbonization of flue gas. The system finally obtains high-purity SO₂ and CO₂ gases respectively, and uses the temperature difference in the regeneration process of SO₂ and CO₂ and utilizes the waste heat of the CO₂ regeneration process as the heat source for SO₂ regeneration, and utilizes the liquid water obtained after CO₂ regeneration and separation as the cold source for gas-liquid separation after SO₂ regeneration to realize temperature cascade utilization inside the system, which fully utilizes the heat from the flue gas treatment process. However, this scheme does not consider the recovery and utilization of waste heat from flue gas before desulfurization.

CN201910225072.9 adopts a waste heat recovery technology through direct contact of flue gas and water, and combines with a high-efficiency water-water plate heat exchanger to realize the recovery and utilization of low-temperature flue gas waste heat, which achieves desulfurization as well, but still emits a large amount of CO₂.

CN201920156807.2 mentions a regenerator flue gas waste heat recovery and reuse system, which includes a high-temperature flue gas waste heat recovery device, a low-temperature flue gas waste heat recovery device, and the like. However, the regenerator relies on optical fiber transmission, has strict requirements on storage conditions and does not have recycling function.

CN201920148383.5 mentions a catalytic flue gas waste heat recovery and recycling system that can remove CO, which also uses an additional waste heat recovery device to recover the heat in the flue gas.

### Summary of the invention

Aiming at the problems existing in the above-mentioned prior art, the present invention proposes a method and device for recovering waste heat in an ammonia-based desulfurization and decarbonization system, in which the heat of the process gas before desulfurization is used to cool down the decarbonized process gas, the process gas before desulfurization heats the intermediate medium through a heat exchanger, the intermediate medium drives a refrigerator for refrigeration, the refrigerant in the refrigerator obtains cooling capacity and cools down the decarbonized process gas through a liquid-liquid heat exchanger. The present invention makes full use of the waste heat in the process gas, which is used for cooling the decarbonized process gas and reducing energy consumption.

The object of the present invention is to solve the above-mentioned problem in the prior art.

The inventors have surprisingly found that the object of the present invention can be achieved by the following method and device described herein.

In one aspect, the present invention relates to a method for recovering a waste heat in an ammonia-based desulfurization and decarbonization system, which is characterized in that a heat of a process gas before desulfurization is used to lower the temperature of a decarbonized process gas.

In some embodiments of the present invention, the process gas involved includes a coal-fired boiler flue gas, a catalytic cracking regeneration flue gas, a sulfur recovery incineration tail gas, and the like. In certain embodiments of the present invention, the process gas comprises CO₂, SO₂, O₂, N₂ and dust particles.

In some embodiments of the present invention, the process gas before desulfurization passes through a process gas heat exchanger to heat an intermediate medium, and the intermediate medium drives a refrigerator for refrigeration, a refrigerant in the refrigerator obtains a cooling capacity and then removes heat from a decarbonization system through a circulating liquid. The circulating liquid refers to a circulating liquid associated with a cooling circulating pump or a decarburization circulating pump, which may be a solution containing ammonium salt. Both the cooling device and the decarbonization device are equipped with a circulating liquid distribution unit. The circulating liquid distribution unit comprises a circulating pump, a circulating pipeline, and a circulating liquid distributor. A circulating liquid is transported from the lower part of the device to the circulating liquid distributor through the circulating pump and the circulating pipeline, comes into contact with the process gas, and is collected in the lower part of the device, which is repeated in this way. A circulating liquid for the cooling device is a solution with components mainly comprising more than 0wt% to 5wt% ammonium sulfate (based on the total weight of the solution), and a circulating liquid for the decarbonization device is a solution with components mainly comprising ammonium bicarbonate, ammonium carbonate, and ammonium carbamate.

In certain embodiments of the present invention, the heated intermediate medium comprises water.

In some embodiments of the present invention, the refrigerant comprises water (preferably refrigerated water), alcohol, or combination thereof, the alcohol comprises monohydric alcohol, dihydric alcohol or polyhydric alcohol, and the alcohol preferably comprises ethylene glycol, propylene glycol, etc.

In some embodiments of the present invention, the process gas before desulfurization has a temperature of 90-300°C, preferably 110-180°C, more preferably 120-170°C, and the process gas after heat exchange through the gas heat exchanger has a temperature of 90-120°C, preferably 95-110°C, and the process gas after desulfurization has a temperature of 40-60°C, preferably 42-47°C.

In some embodiments of the present invention, the intermediate medium has a temperature of 60-90°C when entering the gas heat exchanger, and a temperature of 70-100°C when leaving the gas heat exchanger, wherein the temperature when entering the gas heat exchanger is lower than the temperature when leaving the gas heat exchanger.

In some embodiments of the present invention, the refrigerant has a temperature of 0 to 30°C, preferably 0 to 20°C when entering the refrigerator, and a temperature of -10 to 20°C, preferably -10 to 10°C when leaving the refrigerator.

In certain embodiments of the present invention, the refrigerant is capable of being used to reduce the temperature of the process gas before decarburization.

In certain embodiments of the present invention, the refrigerant is capable of being used to remove a heat of decarbonization reaction and a heat of crystallization.

In some embodiments of the present invention, a cooling device is provided before decarburization, and the device is provided with at least one layer of circulating liquid distribution unit, and the refrigerant passes through the liquid-liquid heat exchanger to reduce the temperature of the circulating liquid.

In some embodiments of the present invention, the decarbonization device is provided with at least one layer of circulating liquid distribution unit, and the refrigerant passes through the liquid-liquid heat exchanger to reduce the temperature of the circulating liquid.

In certain embodiments of the present invention, the liquid-liquid heat exchanger comprises a plate heat exchanger.

In another aspect, the present invention relates to a device for recovering a waste heat in an ammonia desulfurization and decarbonization system, which is characterized in that, along a flow direction of a process gas, a waste heat recovery device, a desulfurization device, a cooling device, a decarbonization device, an ammonia-removing device are sequentially provided, wherein,
the waste heat recovery device comprises a gas heat exchanger, a refrigerator, and a liquid-liquid heat exchanger, the gas heat exchanger is located in front of the desulfurization device, the refrigerator is connected to the gas heat exchanger and the liquid-liquid heat exchanger through pipelines, and the liquid-liquid heat exchanger is connected to the cooling device.

In some embodiments of the present invention, the cooling device is provided with at least one layer of circulating liquid unit, which comprises a circulating pump, a circulating pipeline, and a circulating liquid distributor.

In some embodiments of the present invention, the liquid-liquid heat exchanger is located on an outlet pipe of the circulation pump.

In some embodiments of the present invention, the liquid-liquid heat exchanger is a plate heat exchanger.

Unless stated to the contrary, the above-described embodiments of the present invention can be combined with each other.

Unless stated to the contrary, % in the present invention is by weight.

### Brief Description of the Drawings

The present invention is explained in more detail below by way of examples with reference to the drawings. These examples are not used to limit the present invention, but serve for a better understanding of the present invention.
Fig. 1 shows a schematic diagram of a method according to an example of the present invention.
Fig. 2 shows a schematic diagram of a method according to a comparative example of the present invention.

In the figures, the same reference numerals refer to the same streams or units, wherein:
1 represents a process gas, 2 represents a gas heat exchanger, 3 represents a refrigerator, 4 represents a desulfurization device, 5 represents a cooling device, 6 represents a liquid collector, 7 represents a decarbonization device, 8 represents a cooling circulation pump, 9 represents a plate heat exchange, 10 represents a decarbonization circulation pump, 11 represents a plate heat exchanger, 12 represents an ammonia removing device, 13 represents a process gas after decarbonization, 14 represents an intermediate medium of gas heat exchanger, 15 represents a cooling water of refrigerator, 16 represents an inflow of cooling water, 17 represents a backflow of cooling water, 18 represents a circulating liquid distributor of cooling device, and 19 represents a circulating liquid distributor of decarbonization device.

The technical effect realized by the present invention:
Aiming at the problem that the waste heat of the medium and low temperature process gases is difficult to use and cannot be effectively utilized, the present invention proposes a method for recovering a waste heat of an ammonia-based desulfurization and decarbonization system, which utilizes the waste heat in the process gas before desulfurization to cool down the decarbonized process gas. The beneficial effect of the present invention is that while desulfurization and decarbonization are performed, the waste heat can be recovered effectively, and the purpose of energy saving and emission reduction can be achieved.

### Specific Models for Carrying Out the present invention

Embodiments of the present invention will be described in detail below in conjugation with examples, but those skilled in the art will understand that the following examples are only for illustrating the present invention, rather than limiting the scope of the present invention.

### Example

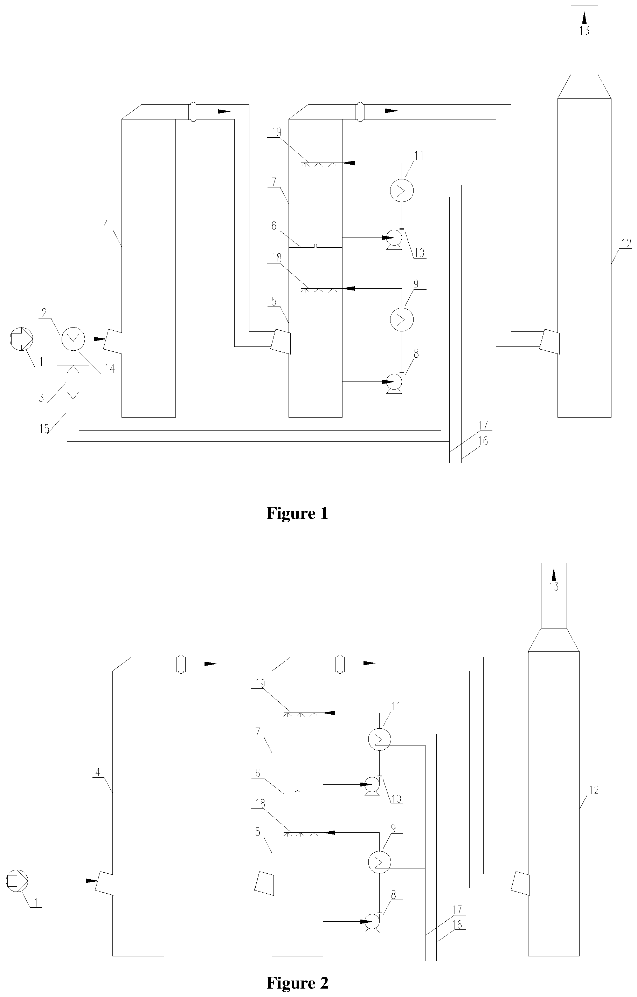

As shown in Figure 1, a process gas **1** (i.e., a coal-fired boiler flue gas, which contained CO₂, SO₂, O₂, N₂ and dust particles) with a temperature of 128°C and a flue gas amount of 857662Nm³/h passed through a gas heat exchanger **2** and was cooled to 100°C, and then entered into a desulfurization device **4;** and an intermediate medium **14** (i.e., water) passed through the gas heat exchanger **2** and was heated from 72°C to 96°C, and then entered into a refrigerator **3** to cool a cooling water **15** from 17°C to 7°C.

After desulfurization, the gas had a temperature of 45°C, and entered into a cooling device **5** and a decarbonization device **7** in sequence. The cooling device **5** and the decarbonization device **7** had tower structures and were separated by a liquid collector **6.** The liquid collector **6** had a tray gas cap structure, and allowed the gas to enter the decarbonization device **7** from the cooling device **5** through the gas cap. Both the cooling device **5** and the decarbonization device **7** were equipped with a circulating liquid distribution unit, the circulating liquid distribution unit comprised a circulating pump, a circulating pipeline, and a circulating liquid distributor, and the circulating liquid was transported from the lower part of the device to the circulating liquid distributor through the circulating pump and the circulating pipeline; after it contacted with the process gas, it was collected in the lower part of the device, and the circulation was repeated in this way. In the cooling device **5,** a cooling device circulating liquid distributor **18** was provided, and under the action of a circulation pump **8** and a plate heat exchanger **9,** the temperature of the gas was lowered to 25°C through the cooling water **15** and a cooling water **16** provided from the outside. The circulating liquid of the cooling device **5** was a solution with components mainly comprising 2wt% ammonium sulfate (based on the total weight of the solution). After passing through the liquid collector **6,** the flue gas entered into the decarbonization device **7,** and the decarbonization device **7** was equipped with a decarbonization device circulating liquid distributor **19,** under the action of a circulation pump **10** and a plate heat exchanger **11,** the reaction heat and crystallization heat were removed, to produce ammonium bicarbonate. The circulating liquid in the decarbonization device **7** is a solution with components mainly comprising ammonium bicarbonate, ammonium carbonate, and ammonium carbamate. The decarburized gas was introduced to an ammonia-removing device 12 to control ammonia escape and then vented as **13.**

Wherein, the cooling water provided from the outside had a consumption of 2339 t/h. At the same time, due to the waste heat recovery of the gas before desulfurization, the temperature was lowered. The desulfurization reaction temperature was 45°C. After desulfurization, the ammonia escape amount was only 2 mg/Nm³, and the water replenishment of the desulfurization system was 6 t/h.

Remarks: The method for detecting ammonia escape was carried out according to HJ 533-2009, and the detection of gas parameters such as flue gas amount was carried out according to GBT 16157-1996.

### Comparative Example

As shown in Figure 2, a process gas **1** (the same coal-fired boiler flue gas as in Example 1, which contained CO₂, SO₂, O₂, N₂ and dust particles) with a temperature of 128°C and a flue gas amount of 857662Nm³/h directly entered into a desulfurization device **4** to perform desulfurization.

After desulfurization, the gas had a temperature of 49°C, and entered into a cooling device **5** and a decarbonization device **7** in sequence. The cooling device **5** and the decarbonization device 7 had tower structures and were separated by a liquid collector **6.** The liquid collector **6** had a tray gas cap structure, and allowed the gas to enter the decarbonization device **7** from the cooling device **5** through the gas cap. Both the cooling device **5** and the decarbonization device **7** were equipped with a circulating liquid distribution unit, which comprised a circulating pump, a circulating pipeline, and a circulating liquid distributor. The circulating liquid was transported from the lower part of the device to the circulating liquid distributor through the circulating pump and the circulating pipeline; after it contacted with the process gas, it was collected at the lower part of the device, and the circulation was repeated in this way. The cooling device **5** was provided with a cooling device circulating liquid distributor **18,** and under the action of a circulation pump **8** and a plate heat exchanger **9,** the temperature of the gas was lowered to 25°C through a cooling water **16** provided from the outside. The circulating liquid of the cooling device **5** was a solution with components mainly comprising 2 wt% ammonium sulfate (based on the total weight of the solution). After passing through the liquid collector **6,** the flue gas entered into the decarbonization device **7,** and the decarbonization device **7** was equipped with a decarbonization device circulating liquid distributor **19,** under the action of a circulation pump **10** and a plate heat exchanger **11,** the reaction heat and crystallization heat were removed, to produce ammonium bicarbonate. The circulating liquid in the decarbonization device **7** was a solution with components mainly comprising ammonium bicarbonate, ammonium carbonate, and ammonium carbamate. The decarburized gas was introduced to an ammonia removing device **12** to control ammonia escape, and then vented as **13.**

Wherein, the cooling water provided from the outside had a consumption of 4267 t/h. The desulfurization reaction temperature was 49°C, the ammonia escape amount after desulfurization was 5 mg/Nm³, and the water replenishment of the desulfurization system was 21 t/h.

Remarks: The method for detecting ammonia escape was carried out according to HJ 533-2009, and the detection of gas parameters such as flue gas amount was carried out according to GBT 16157-1996.

It could be clearly seen from the above that, compared with the Comparative Example, the Example of the present application showed significant decrease in the consumption of cooling water, the temperature of the desulfurization reaction, the escape amount of ammonia after desulfurization, and the water replenishment amount of the desulfurization system.

Furthermore, the present invention relates to the following non-limiting aspects:
1. A method for waste heat recovery of an ammonia-based desulfurization and decarbonization system, characterized in that, a heat of a process gas before desulfurization is used to remove a heat of decarbonization system.
2. The method according to aspect 1, characterized in that the process gas before desulfurization is used to heat an intermediate medium through a gas heat exchanger, and the intermediate medium is used to drive a refrigerator for refrigeration, and a refrigerant in the refrigerator obtains a cooling capacity and removes the heat of decarbonization system through a circulating liquid.
3. The method according to aspect 2, characterized in that the heated intermediate medium comprises water.
4. The method according to aspect 2 or 3, characterized in that the refrigerant comprises water, alcohol, or a combination thereof.
5. The method according to aspect 2 or 3, characterized in that the process gas has a temperature of 90-300°C, preferably 110-180°C, more preferably 120-170°C before desulfurization, and the process gas has a temperature of 90-120°C after passing the gas heat exchanger, and a temperature of 40-60°C after desulfurization.
6. The method according to aspect 2 or 3, characterized in that the intermediate medium has a temperature of 60-90°C when entering the gas heat exchanger, and a temperature of 70-100°C when leaving the gas heat exchanger, wherein the temperature when entering the gas heat exchanger is lower than the temperature when leaving the gas heat exchanger.
7. The method according to aspect 2 or 3, characterized in that the refrigerant has a temperature of 0 to 30°C when entering the refrigerator, and a temperature of -10 to 20°C when leaving the refrigerator.
8. The method according to aspect 2 or 3, characterized in that the refrigerant is capable of being used to reduce the temperature of the process gas before decarburization.
9. The method according to aspect 2 or 3, characterized in that the refrigerant is capable of being used to remove a heat of decarbonization reaction and a heat of crystallization.
10. The method according to aspect 8, characterized in that a cooling device is provided before decarburization, and the device is provided with at least one layer of circulating liquid distribution unit, and the refrigerant is used to reduce the temperature of the circulating liquid through a liquid-liquid heat exchanger, wherein the liquid-liquid heat exchanger is preferably a plate heat exchanger.
11. The method according to aspect 9, characterized in that the decarbonization device is provided with at least one layer of circulating liquid distribution unit, and the refrigerant is used to reduce the temperature of the circulating liquid through a liquid-liquid heat exchanger.
12. A device for waste heat recovery of an ammonia-based desulfurization and decarbonization system, characterized in that along a flow direction of a process gas, a waste heat recovery device, a desulfurization device, a cooling device, a decarbonization device, and an ammonia removing device are arranged in sequence, wherein
   the waste heat recovery device comprises a gas heat exchanger, a refrigerator, and a liquid-liquid heat exchanger, the gas heat exchanger is located in front of the desulfurization device, the refrigerator is connected to the gas heat exchanger and the liquid-liquid heat exchanger through pipelines, and the liquid-liquid heat exchanger is connected to the cooling device, wherein the liquid-liquid heat exchanger is preferably a plate heat exchanger.
13. The device according to aspect 12, characterized in that the cooling device is provided with at least one layer of circulating liquid distribution unit, which comprises a circulating pump, a circulating pipeline, and a circulating liquid distributor.
14. The device according to aspect 12 or 13, characterized in that the liquid-liquid heat exchanger is located on an outlet pipe of the circulation pump.

The specific examples described above have further described the purpose, technical solutions and beneficial effects of the present invention in detail. It should be understood that the above descriptions are only specific examples of the present invention and are not intended to limit the scope of the present invention. Any modification, equivalent replacement, improvement, etc. made within the spirit and principles of the present invention shall be included in the scope of protection of the invention.

## Claims

1. A method for waste heat recovery of an ammonia-based desulfurization and decarbonization system, **characterized in that**, a heat of a process gas before desulfurization is used to remove a heat of decarbonization system.

2. The method according to claim 1, **characterized in that** the process gas before desulfurization is used to heat an intermediate medium through a gas heat exchanger, and the intermediate medium is used to drive a refrigerator for refrigeration, and a refrigerant in the refrigerator obtains a cooling capacity and removes the heat of decarbonization system through a circulating liquid.

3. The method according to claim 2, **characterized in that** the heated intermediate medium comprises water.

4. The method according to claim 2 or 3, **characterized in that** the refrigerant comprises water, alcohol, or a combination thereof.

5. The method according to claim 2 or 3, **characterized in that** the process gas has a temperature of 90-300°C, preferably 110-180°C, more preferably 120-170°C before desulfurization, and the process gas has a temperature of 90-120°C after passing the gas heat exchanger, and a temperature of 40-60°C after desulfurization.

6. The method according to claim 2 or 3, **characterized in that** the intermediate medium has a temperature of 60-90°C when entering the gas heat exchanger, and a temperature of 70-100°C when leaving the gas heat exchanger, wherein the temperature when entering the gas heat exchanger is lower than the temperature when leaving the gas heat exchanger.

7. The method according to claim 2 or 3, **characterized in that** the refrigerant has a temperature of 0 to 30°C when entering the refrigerator, and a temperature of -10 to 20°C when leaving the refrigerator.

8. The method according to claim 2 or 3, **characterized in that** the refrigerant is capable of being used to reduce the temperature of the process gas before decarburization.

9. The method according to claim 2 or 3, **characterized in that** the refrigerant is capable of being used to remove a heat of decarbonization reaction and a heat of crystallization.

10. The method according to claim 8, **characterized in that** a cooling device is provided before decarburization, and the device is provided with at least one layer of circulating liquid distribution unit, and the refrigerant is used to reduce the temperature of the circulating liquid through a liquid-liquid heat exchanger, wherein the liquid-liquid heat exchanger is preferably a plate heat exchanger.

11. The method according to claim 9, **characterized in that** the decarbonization device is provided with at least one layer of circulating liquid distribution unit, and the refrigerant is used to reduce the temperature of the circulating liquid through a liquid-liquid heat exchanger.

12. A device for waste heat recovery of an ammonia-based desulfurization and decarbonization system, **characterized in that** along a flow direction of a process gas, a waste heat recovery device, a desulfurization device, a cooling device, a decarbonization device, and an ammonia removing device are arranged in sequence, wherein
the waste heat recovery device comprises a gas heat exchanger, a refrigerator, and a liquid-liquid heat exchanger, the gas heat exchanger is located in front of the desulfurization device, the refrigerator is connected to the gas heat exchanger and the liquid-liquid heat exchanger through pipelines, and the liquid-liquid heat exchanger is connected to the cooling device, wherein the liquid-liquid heat exchanger is preferably a plate heat exchanger.

13. The device according to claim 12, **characterized in that** the cooling device is provided with at least one layer of circulating liquid distribution unit, which comprises a circulating pump, a circulating pipeline, and a circulating liquid distributor.

14. The device according to claim 12 or 13, **characterized in that** the liquid-liquid heat exchanger is located on an outlet pipe of the circulation pump.
